# FASCICULE DE BREVET EUROPEEN

(11) **EP 1 000 308 B1**
(45) Date de publication et mention de la délivrance du brevet: **31.03.2004**
(21) Numéro de dépôt: 99922228.4
(22) Date de dépôt: 27.05.1999
(51) Int. Cl.: F28F 9/00, F28D 1/04

(54) **ENSEMBLE D'ECHANGEURS DE CHALEUR POUR VEHICULE AUTOMOBILE**
WÄRMETAUSCHERANORDNUNG FÜR KRAFTFAHRZEUG
HEAT EXCHANGER ASSEMBLY FOR MOTOR VEHICLE

(30) Priorité: 28.05.1998 FR 9806736
(43) Date de publication de la demande: 17.05.2000
(73) Titulaire: VALEO THERMIQUE MOTEUR S.A., 78321 La Verrière (FR)
(72) Inventeur: MAHE, Christian, F-78490 Le Tremblay sur Mauldre (FR)
(86) Numéro de dépôt international: PCT/FR1999/001242
(87) Numéro de publication internationale: WO 1999/061860

(56) Documents cités:
- EP-A- 0 401 571
- EP-A- 0 693 665
- WO-A-97/42049
- DE-U- 29 712 351

## Description

L'invention se rapporte à un ensemble d'échangeurs de chaleur pour véhicule automobile.

Elle concerne plus particulièrement un ensemble d'échangeurs de chaleur comprenant un échangeur principal ayant un corps monté entre deux boîtes collectrices, auquel est assemblé au moins un échangeur secondaire ayant un corps monté entre deux boites collectrices, de sorte qu'un même flux d'air puisse traverser les corps respectifs desdits échangeurs.

Il est déjà connu d'assembler sur un échangeur principal, tel qu'un radiateur de refroidissement d'un moteur de véhicule automobile, un ou plusieurs échangeurs secondaires afin de constituer un ensemble, encore appelé module, prêt à être installé dans le véhicule. Cet échangeur secondaire est constitué le plus souvent d'un refroidisseur d'air de suralimentation du moteur ou d'un condenseur de climatisation.

Dans le module ainsi formé, l'échangeur secondaire peut être disposé, selon le cas, soit en amont soit en aval de l'échangeur principal, par rapport au sens de circulation du flux d'air qui traverse les corps respectifs des échangeurs.

L'assemblage du ou des échangeurs secondaires sur l'échangeur principal est obtenu généralement par l'intermédiaire de pattes solidaires de l'échangeur secondaire et de vis introduites dans les boites collectrices de l'échangeur principal. Ces pattes peuvent être réalisées en matière plastique et venues de moulage avec l'échangeur secondaire, soit être métalliques et brasées sur l'échangeur secondaire.

Habituellement, la fixation de ces pattes est obtenue par des vis auto-taraudeuses introduites dans des plots ou bossages que comportent les boîtes collectrices de l'échangeur principal.

Un tel assemblage par vis constitue une opération coûteuse et peu compatible avec les cadences élevées imposées par les chaînes d'assemblage de l'industrie automobile.

De plus, le démontage des échangeurs en cas d'intervention sur le véhicule est souvent rendu difficile.

Le document EP-A-0 693 665 décrit, par ailleurs, un ensemble d'échangeurs de chaleur selon le préambule de la revendication 1. Toutefois, les moyens d'assemblage sont dépendant des échangeurs, ce qui n'est pas satisfaisant.

L'invention a notamment pour but de surmonter les inconvénients précités.

Pour cela l'invention présente les caractéristiques définies à la revendication 1.

Ainsi, l'assemblage des échangeurs s'effectue par de simples opérations d'emboîtement et d'encliquetage sans qu'il soit nécessaire de faire appel à des vis et à des outils particuliers.

Le montage des échangeurs, de même que leur démontage éventuel, en sont donc grandement facilités.

D'autres caractéristiques complémentaires ou.alternatives de l'invention sont énoncées ci-après :
- l'une des embases définit un logement de forme conjuguée de celle d'un pion, alors que l'autre embase définit un logement offrant un jeu pour le montage de l'autre pion.
- Chacune des boîtes collectrices de l'échangeur principal est équipée d'une embase à une extrémité inférieure et d'une patte à une extrémité supérieure.
- Chacune des boîtes collectrices de l'échangeur principal, ainsi que son embase et sa patte, sont réalisées d'une seule pièce par moulage, en particulier d'une matière plastique.
- Chacun des pions est formé à une extrémité d'une boîte collectrice de l'échangeur secondaire.
- Chacun des pions est formé en saillie à une extrémité inférieure d'une boite collectrice de l'échangeur secondaire.
- Chacun des pions est formé directement par une extrémité inférieure d'une boîte collectrice de l'échangeur secondaire.
- Chacune des attaches comporte une première partie propre à être encliquetée dans une patte de l'échangeur principal et une deuxième partie munie d'un logement dans lequel peut être emmanché un autre pion de l'échangeur secondaire.
- Cet autre pion est rattaché à une extrémité supérieure d'une boîte collectrice de l'échangeur secondaire.
- Cet autre pion est formé directement par une extrémité supérieure d'une boîte collectrice de l'échangeur secondaire.
- L'échangeur secondaire est lui-même équipé de deux embases analogues à celles de l'échangeur principal et de deux pattes analogues à celles de l'échangeur principal, ce qui permet d'assembler un premier échangeur secondaire sur l'échangeur principal et, le cas échéant, un deuxième échangeur secondaire sur le premier échangeur secondaire.
- L'échangeur principal est un radiateur de refroidissement d'un moteur de véhicule automobile, tandis que l'échangeur secondaire est un refroidisseur d'air de suralimentation du moteur ou un condenseur de climatisation.
- Le refroidisseur d'air de suralimentation est équipé de deux embases et de deux pattes, ce qui permet de l'assembler directement sur le radiateur de refroidissement et d'assembler un condenseur sur ce refroidisseur d'air de suralimentation.

Dans la description qui suit faite seulement à titre d'exemple, on se réfère aux dessins annexés, sur lesquels :
- la figure 1 est une vue partielle en perspective d'un ensemble d'échangeurs de chaleur selon l'invention comprenant un échangeur principal sur lequel sont assemblés deux échangeurs secondaires ;
- la figure 2 est une autre vue partielle en perspective de l'ensemble de la figure 1 ;
- la figure 3 est une vue en perspective d'un ensemble comprenant un échangeur principal et un échangeur secondaire ;
- la figure 4 est une autre vue partielle en perspective et à échelle agrandie de l'ensemble de la figure 3 ; et
- la figure 5 est une vue partielle en perspective d'un autre ensemble comprenant un échangeur principal et un échangeur secondaire.

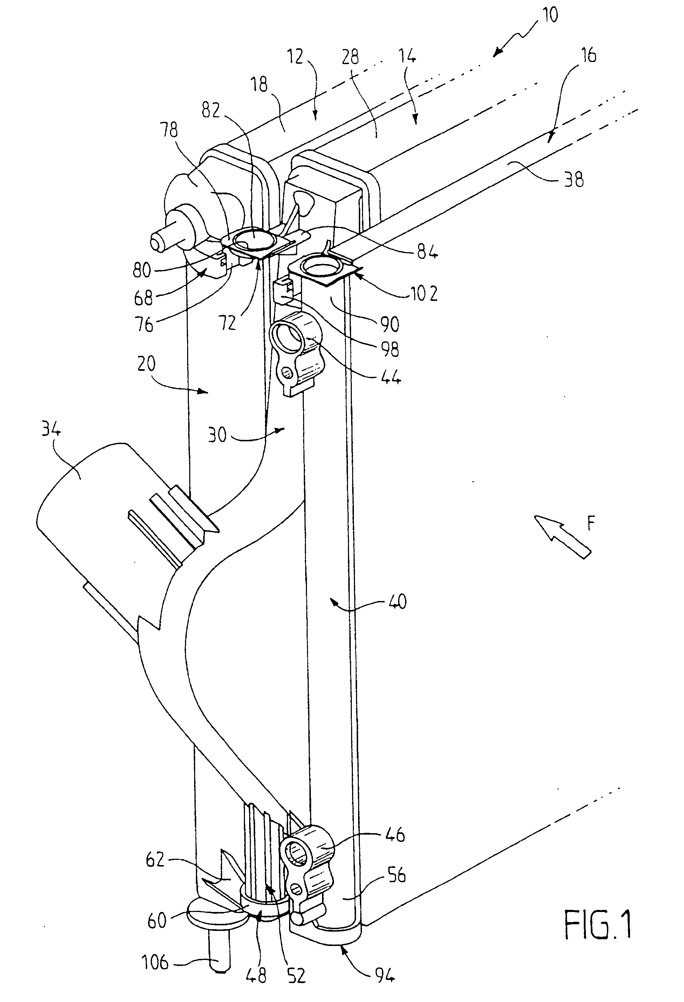

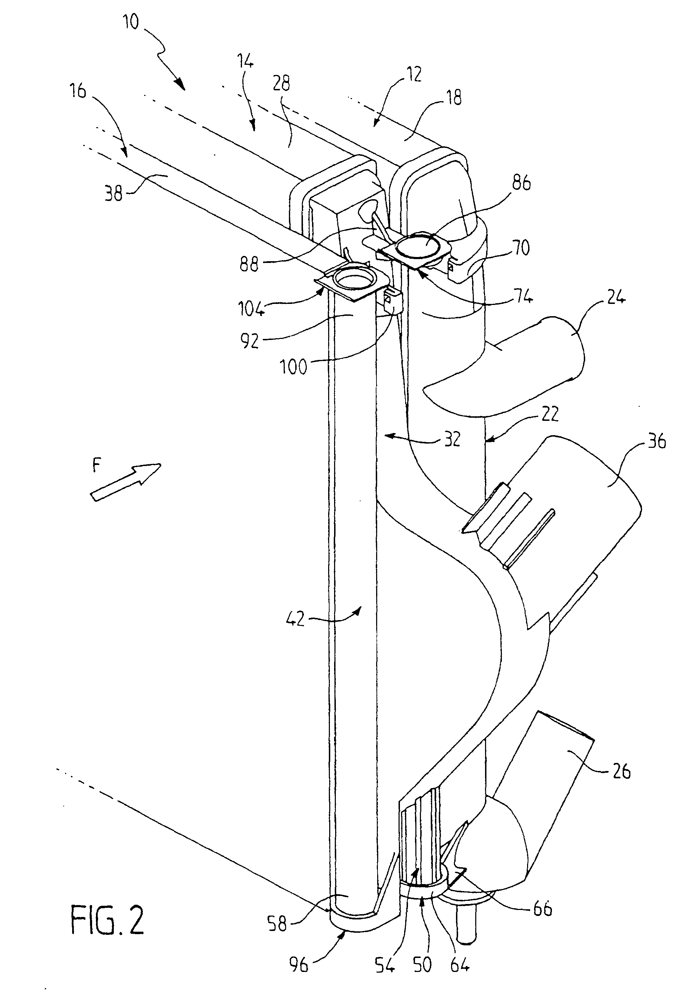

On se réfère tout d'abord aux figures 1 et 2 qui montrent un ensemble 10 composé de trois échangeurs de chaleur : un échangeur principal 12, un premier échangeur secondaire 14 assemblé sur l'échangeur 12, et un deuxième échangeur secondaire 16 assemblé sur l'échangeur 14. Dans l'exemple, l'échangeur 12 est un radiateur de refroidissement d'un moteur de véhicule automobile, l'échangeur 14 un refroidisseur d'air de suralimentation du moteur et l'échangeur 16 un condenseur de climatisation.

L'échangeur principal 12 comprend un corps ou faisceau 18 monté entre deux boîtes collectrices 20 et 22, toutes deux réalisées par moulage d'une matière plastique. La boîte collectrice 22 comporte deux tubulures 24 et 26 servant à l'entrée et à la sortie du liquide de refroidissement du moteur.

L'échangeur secondaire 14 comprend un corps ou faisceau 28 monté entre deux boîtes collectrices 30 et 32 réalisées par moulage d'une matière plastique. Ces deux boîtes sont munies respectivement de deux tubulures 34 et 36 servant à l'entrée et la sortie d'un flux d'air comprimé destiné à la suralimentation du moteur.

L'échangeur secondaire 16 comprend un corps ou faisceau 38 monté entre deux boites collectrices 40 et 42 réalisées en métal et présentant une configuration cylindrique. La boîte collectrice 40 est munie de deux embouts 44 et 46 qui constituent des tubulures pour l'entrée et la sortie d'un fluide frigorigène circulant dans un circuit de climatisation.

Les corps ou faisceaux 38, 28 et 18 sont propres à être traversés, dans cet ordre, par un flux d'air F produit par la vitesse du véhicule et/ou par un ou plusieurs groupes moto-ventilateurs appropriés.

Conformément à l'invention, des moyens sont prévus pour assembler les échangeurs 12, 14 et 16 par l'intermédiaire de leurs boîtes collectrices respectives.

Avec les boîtes collectrices 20 et 22 de l'échangeur principal 12 sont venues de moulage des embases respectives 48 et 50 formant saillie latéralement. Ces embases délimitent des logements de réception pour des pions respectifs 52, 54 formés respectivement en saillie à l'extrémité inférieure de la boîte collectrice 30 et à celle de la boîte collectrice 32 de l'échangeur secondaire 14. Ces pions ont sensiblement la même forme générale cylindrique et le même espacement que les extrémités inférieures 56 et 58 des boites collectrices 40 et 42 de l'échangeur secondaire 16.

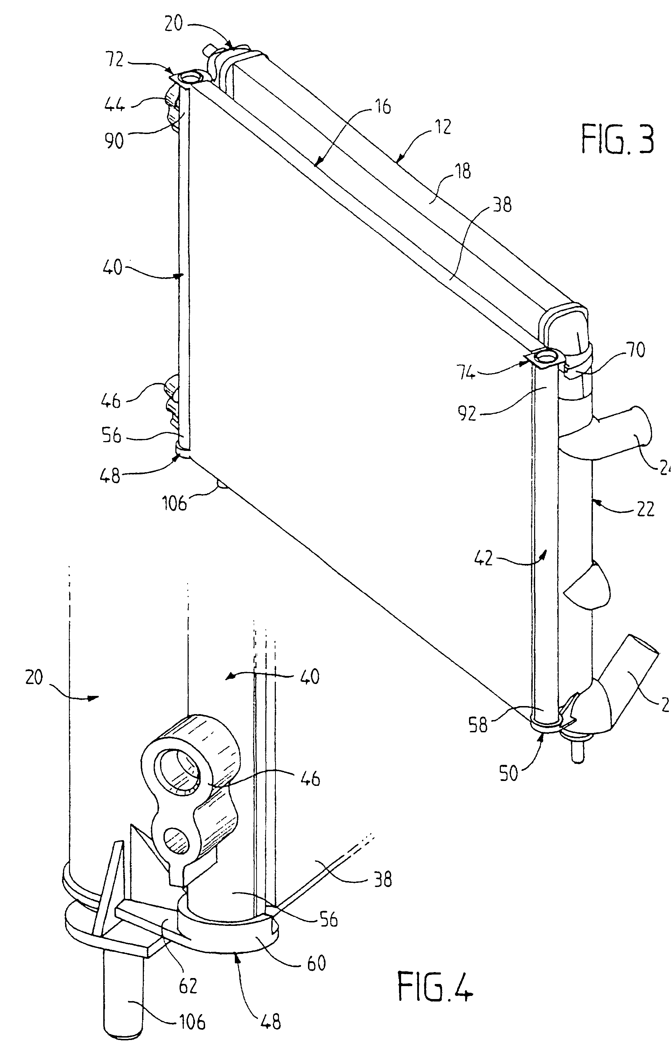

L'embase 48 (figures 1 et 4) comporte une cuvette 60 rattachée à la boîte collectrice 20 par une patte latérale 62. Cette cuvette 60 est étroitement adaptée à la forme cylindrique du pion 52. De même, l'embase 50 (figure 2) comporte une cuvette 64 destinée à recevoir le pion 54 et rattachée à la boîte collectrice 22 par une patte latérale 66. Toutefois, la cuvette 64 comporte un contour plus élargi pour permettre d'accueillir le pion 54 en dépit des variations dimensionnelles des échangeurs.

En outre, avec les boîtes collectrices 20 et 22 sont venues de moulage, en partie supérieure, des pattes respectives 68 et 70 formées en saillie. Sur chacune de ces pattes peut s'encliqueter une attache 72 respectivement 74 susceptible d'être fixée de manière amovible sur l'échangeur secondaire 14. Chacune de ces attaches, par exemple l'attache 72, comprend une première partie 76 propre à s'encliqueter dans la patte 68 et une deuxième partie 78 délimitant un logement circulaire 80 propre à recevoir un pion cylindrique 82 rattaché à la boîte collectrice 30 de l'échangeur 14 par une patte latérale 84 (figure 1).

De façon correspondante, l'attache 74 définit un logement pour un pion cylindrique 86 rattaché à la boîte collectrice 32 par une patte 88. Les pions 82 et 86 sont venus de moulage avec les boîtes collectrices 30 et 32 dont ils dépendent.

Les pions 82 et 86 ont sensiblement la même configuration que les extrémités supérieures respectives 90 et 92 des boîtes collectrices 40 et 42.

Ainsi, pour assembler l'échangeur secondaire 14 sur l'échangeur principal 12, il suffit d'engager les pions 52 et 54 dans les embases 48 et 50 en disposant les deux échangeurs dans une position parallèle. Ensuite, il suffit de mettre en place les deux attaches 72 et 74 par de simples opérations d'emboîtement et d'encliquetage.

Comme on peut le voir sur les figures 1 et 2, l'échangeur secondaire 14 est muni en partie inférieure de deux embases 94 et 96 analogues aux embases 48 et 50 de l'échangeur 12 et présentant le même espacement. De plus, cet échangeur 14 comporte en partie supérieure deux pattes 98 et 100 présentant les mêmes configurations que les pattes 68 et 70 de l'échangeur 12. L'embase 94 et la patte 98 sont venues de moulage avec la boîte collectrice 30, alors que l'embase 96 et la patte 100 sont venues de moulage avec la boîte collectrice 32.

Il en résulte que l'échangeur 16 peut être assemblé sur l'échangeur 14 d'une façon analogue en emboîtant les extrémités 56 et 58 des boites collectrices 40 et 42 dans les embases 94 et 96. Ensuite, il suffit de maintenir l'échangeur 16 en partie supérieure par des attaches 102 et 104 analogues aux attaches 72 et 74.

On comprendra que les échangeurs 14 et 16 sont ainsi interchangeables ce qui permet en variante, comme montré à la figure 3, d'assembler directement l'échangeur secondaire 16 (condenseur) sur l'échangeur principal 12 (radiateur) dans le cas où le véhicule ne nécessite pas de refroidisseur d'air de suralimentation.

La figure 4 montre un détail de l'assemblage de l'ensemble de la figure 3. On peut voir que l'embase 48 reçoit l'extrémité inférieure 56 de l'échangeur 16. Par ailleurs, la boîte collectrice 20 de l'échangeur 12 comporte en partie inférieure une broche 106 permettant le montage de l'échangeur 12, et donc de l'ensemble 10, sur la structure (non représentée) du véhicule.

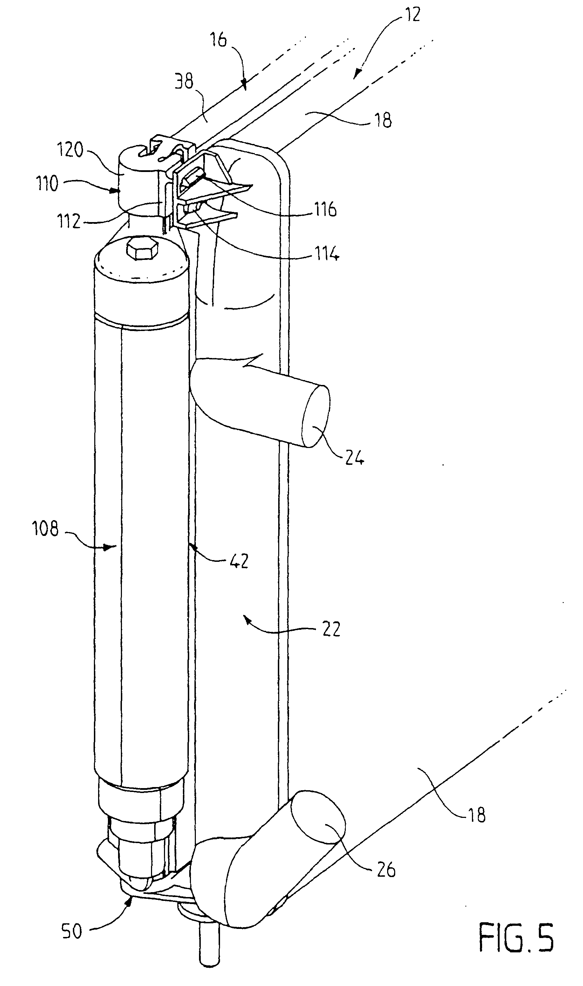

Dans la variante de réalisation de la figure 5, à laquelle on se réfère maintenant, l'échangeur secondaire 16 est également assemblé directement sur l'échangeur principal 12. La boite collectrice 42 de l'échangeur 16 est rattachée à un réservoir 48 de forme générale cylindrique qui s'étend verticalement. Dans cette forme de réalisation, la fixation s'effectue par une attache 110 qui diffère quelque peu de l'attache 74 décrite précédemment. Cette attache comporte une première partie 112 munie d'un pion 114 et d'une patte élastique 116 propres à coopérer avec une patte 118 de l'échangeur 12, et une deuxième partie 120 susceptible de s'emboîter directement sur l'extrémité supérieure de la boîte collectrice 42.

Ainsi, conformément à l'invention, il est possible de réaliser plusieurs ensembles différents : échangeur 12 + échangeur 14 ; échangeur 12 + échangeur 16 ; échangeur 12 + échangeur 14 + échangeur 16.

Bien entendu, l'invention n'est pas limitée aux exemples de réalisation donnés précédemment et s'étend à d'autres variantes.

Il est possible notamment de prévoir que chacune des boîtes collectrices de l'échangeur principal comporte une nervure longitudinale propre à venir en appui étanche contre une boîte collectrice d'un échangeur secondaire assemblé sur l'échangeur principal.

## Revendications

1. Ensemble d'échangeurs de chaleur, comprenant un échangeur principal (12) ayant un corps (18) monté entre deux boites collectrices (20, 22), auquel est assemblé au moins un échangeur secondaire (14 ; 16) ayant un corps (28 ; 38) monté entre deux boîtes collectrices (30, 32 ; 40, 42) de sorte qu'un même flux d'air (F) puisse traverser les corps respectifs desdits échangeurs, chacune des boites collectrices (20, 22) de l'échangeur principal (12) étant munie, à une extrémité, d'une embase en saillie (48, 50) formant logement de réception pour un pion (52, 54 ; 56, 58) de l'échangeur secondaire (14 ; 16) et, à une autre extrémité, d'une patte en saillie (68, 70 ; 98, 100) sur laquelle peut s'encliqueter une attache (72, 74 ; 102, 104) de l'échangeur secondaire (14 ; 16), **caractérisé en ce que** ladite attache (72, 74 ; 102, 104) est une pièce indépendante et est fixée de manière amovible sur l'échangeur de chaleur secondaire.

2. Ensemble selon la revendication 1, **caractérisé en ce que** l'une (48) des embases définit un logement de forme conjuguée de celle d'un pion, alors que l'autre embase (50) définit un logement offrant un jeu pour le montage de l'autre pion.

3. Ensemble selon l'une des revendications 1 et 2, **caractérisé en ce que** chacune des boîtes collectrices (20, 22) de l'échangeur principal (12) est équipée d'une embase (48, 50) à une extrémité inférieure et d'une patte (68, 70) à une extrémité supérieure.

4. Ensemble selon l'une des revendications 1 à 3, **caractérisé en ce que** chacune des boites collectrices (20, 22) de l'échangeur principal (12) ainsi que son embase (48, 50) et sa patte (68, 70) sont réalisées d'une seule pièce par moulage, en particulier d'une matière plastique.

5. Ensemble selon l'une des revendications 1 à 4, **caractérisé en ce que** chacun des pions (52, 54 ; 56, 58) est formé à une extrémité d'une boîte collectrice (30, 32 ; 40, 42) de l'échangeur secondaire (14 ; 16)

6. Ensemble selon la revendication 5, **caractérisé en ce que** chacun des pions (52, 54) est formé en saillie à une extrémité inférieure d'une boîte collectrice (30, 32) de l'échangeur secondaire (14).

7. Ensemble selon la revendication 5, **caractérisé en ce que** chacun des pions (56, 58) est formé directement par une extrémité inférieure d'une boîte collectrice (40, 42) de l'échangeur secondaire (16).

8. Ensemble selon l'une des revendications 1 à 7, **caractérisé en ce que** chacune des attaches (72, 74) comporte une première partie propre à être encliquetée dans une patte (68, 70) de l'échangeur principal et une deuxième partie munie d'un logement dans lequel peut être emmanché un autre pion (82, 86 ; 90, 92) de l'échangeur secondaire (14 ; 16).

9. Ensemble selon la revendication 8, **caractérisé en ce que** cet autre pion (82, 86) est rattaché à une extrémité supérieure d'une boîte collectrice (30, 32) de l'échangeur secondaire (14).

10. Ensemble selon la revendication 8, **caractérisé en ce que** cet autre pion (90, 92) est formé directement par une extrémité supérieure d'une boîte collectrice (40, 42) de l'échangeur secondaire (16).

11. Ensemble selon l'une des revendications 1 à 10, **caractérisé en ce que** l'échangeur secondaire (14) est lui-même équipé de deux embases (94, 96) analogues à celles de l'échangeur principal (12) et de deux pattes (98, 100) analogues à celles de l'échangeur principal, ce qui permet d'assembler un premier échangeur secondaire (14) sur l'échangeur principal (12) et, le cas échéant, un deuxième échangeur secondaire (16) sur le premier échangeur secondaire (14).

12. Ensemble selon l'une des revendications 1 à 11, **caractérisé en ce que** l'échangeur principal (12) est un radiateur de refroidissement d'un moteur de véhicule automobile, tandis que l'échangeur secondaire est un refroidisseur d'air de suralimentation du moteur (14) ou un condenseur de climatisation (16).

13. Ensemble selon la revendication 12, **caractérisé en ce que** le refroidisseur d'air de suralimentation (14) est équipé de deux pattes (84, 88), ce qui permet de l'assembler directement sur le radiateur de refroidissement (12) et d'assembler un condenseur de climatisation (16) sur ce refroidisseur d'air de suralimentation.

## Claims

1. Heat exchanger assembly comprising a main exchanger (12) having a body (18) mounted between two header boxes (20, 22), on which body is assembled at least one secondary exchanger (14; 16) having a body (22; 38) mounted between two header boxes (30, 32; 40, 42) in such a way that the same air flow (F) can pass through the respective bodies of the said exchangers, each of the header boxes (20, 22) of the main exchanger (12) being fitted, at one end, with a projecting footing (48, 50) forming a housing for receiving a peg (52, 54; 56, 58) of the secondary exchanger (14; 16) and, at another end, with a projecting tab (68, 70; 98, 100), onto which can be snap-fastened an attachment (72, 74; 102, 104) of the secondary exchanger (14; 16), **characterized in that** the said attachment (72, 74; 102, 104) is an independent component and is fixed removably on the secondary heat exchanger.

2. Assembly according to Claim 1, **characterized in that** one (48) of the footings defines a housing whose shape is coordinated with that of one peg, whereas the other footing (50) defines a housing providing a degree of play for mounting the other peg.

3. Assembly according to either of Claims 1 and 2, **characterized in that** each of the header boxes (20, 22) of the main exchanger (12) is equipped with a footing (48, 50) at a lower end and with a tab (68, 70) at an upper end.

4. Assembly according to one of Claims 1 to 3, **characterized in that** each of the header boxes (20, 22) of the main exchanger (12) together with its footing (48, 50) and its tab (68, 70) are produced as a single piece by moulding, in particular by moulding a plastic.

5. Assembly according to one of Claims 1 to 4, **characterized in that** each of the pegs (52, 54; 56, 68) is formed at one end of a header box (30, 32; 40, 42) of the secondary exchanger (14; 16).

6. Assembly according to Claim 5, **characterized in that** each of the pegs (52, 54) is formed so as to project at a lower end of a header box (30, 32) of the secondary exchanger (14).

7. Assembly according to Clam 5, **characterized in that** each of the pegs (56, 58) is formed directly by a lower end of a header box (40, 42) of the secondary exchanger (16).

8. Assembly according to one of Claims 1 to 7, **characterized in that** each of the attachments (72, 74) comprises a first part able to be snap-fastened into a tab (68, 70) of the main exchanger and a second part fitted with a housing into which another peg (82, 86; 90, 92) of the secondary exchanger (14; 16) can be fitted.

9. Assembly according to Claim 8, **characterized in that** this other peg (82, 86) is attached to an upper end of a header box (30, 32) of the secondary exchanger (14).

10. Assembly according to Claim 8, **characterized in that** this other peg (90, 92) is formed directly by an upper end of a header box (40, 42) of the secondary exchanger (16).

11. Assembly according to one of Claims 1 to 10, **characterized in that** the secondary exchanger (14) is itself equipped with two footings (94, 96) similar to those of the main exchanger (12) and with two tabs (98, 100) similar to those of the main exchanger, which enables a first secondary exchanger (14) to be assembled on the main exchanger (12) and, where appropriate, a second secondary exchanger (16) to be assembled on the first secondary exchanger (14).

12. Assembly according to one of Claims 1 to 11, **characterized in that** the main exchanger (12) is a radiator for cooling a motor vehicle engine, whereas the secondary exchanger is an engine intercooler (14) or an air-conditioning condenser (16).

13. Assembly according to Claim 12, **characterized in that** the intercooler (14) is equipped with two tabs (84, 88), which enables it to be directly assembled on the cooling radiator (12) and an air-conditioning condenser (16) to be assembled on this intercooler.

## Patentansprüche

1. Wärmetauscherbaugruppe mit einem Hauptwärmetauscher (12) mit einem Körper (18), der zwischen zwei Sammelkästen (20, 22) montiert ist, an den zumindest ein Nebenwärmetauscher (14; 16) mit einem Körper (28; 38), der zwischen zwei Sammelkästen (30, 32; 40, 42) montiert ist, angebaut ist, so dass ein und derselbe Luftstrom (F) die jeweiligen Körper der Wärmetauscher durchströmen kann, wobei jeder Sammelkasten (20, 22) des Hauptwärmetauschers (12) an einem Ende mit einem vorspringenden Sockel (48, 50) versehen ist, der eine Aufnahme für einen Zapfen (52, 54; 56, 58) des Nebenwärmetauschers (14; 16) bildet, und am anderen Ende mit einer vorspringenden Halterung (68, 70; 98, 100), in der ein Befestigungselement (72, 74; 102, 104) des Nebenwärmetauschers (14; 16) einrasten kann, **dadurch gekennzeichnet, dass** das Befestigungselement (72, 74; 102, 104) ein eigenständiges Teil ist und auf ablösbare Weise an dem Nebenwärmetauscher befestigt ist.

2. Baugruppe nach Anspruch 1, **dadurch gekennzeichnet, dass** einer (48) der Sockel eine Aufnahme mit einer Form definiert, die zu derjenigen eines Zapfens konjugiert ist, während der andere Sockel (50) eine Aufnahme definiert, die für die Montage des anderen Zapfens ein Spiel bietet.

3. Baugruppe nach einem der Ansprüche 1 und 2, **dadurch gekennzeichnet, dass** jeder der Sammelkästen (20, 22) des Hauptwärmetauschers (12) mit einem Sockel (48, 50) an einem unteren Ende und einer Halterung (68, 70) am oberen Ende versehen ist.

4. Baugruppe nach einem der Ansprüche 1 bis 3, **dadurch gekennzeichnet, dass** jeder Sammelkasten (20, 22) des Hauptwärmetauschers (12) sowie sein Sockel (48, 50) und seine Halterung (68, 70) aus einem einzigen Teil durch Formung insbesondere aus einem Kunststoff geformt werden.

5. Baugruppe nach einem der Ansprüche 1 bis 4, **dadurch gekennzeichnet, dass** jeder Zapfen (52, 54; 56, 58) an einem Ende eines Sammelkastens (30, 32; 40, 42) des Nebenwärmetauschers (14; 16) ausgebildet ist.

6. Baugruppe nach Anspruch 5, **dadurch gekennzeichnet, dass** jeder Zapfen (52, 54) vorspringend an einem unteren Ende eines Sammelkastens (30, 32) des Nebenwärmetauschers (14) ausgebildet ist.

7. Baugruppe nach Anspruch 5, **dadurch gekennzeichnet, dass** jeder Zapfen (56, 58) direkt durch ein unteres Ende eines Sammelkastens (40, 42) des Nebenwärmetauschers (16) gebildet wird.

8. Baugruppe nach einem der Ansprüche 1 bis 7, **dadurch gekennzeichnet, dass** jedes Befestigungselement (72, 74) einen ersten Teil umfasst, der geeignet ist, in eine Halterung (68, 70) des Hauptwärmetauschers einzurasten, und einen zweiten Teil, der mit einer Aufnahme versehen ist, in der ein weiterer Zapfen (82, 86; 90, 92) des Nebenwärmetauschers (14; 16) eingepasst werden kann.

9. Baugruppe nach Anspruch 8, **dadurch gekennzeichnet, dass** dieser andere Zapfen (82, 86) an einem oberen Ende eines Sammelkastens (30, 32) des Nebenwärmetauschers (14) angefügt ist.

10. Baugruppe nach Anspruch 8, **dadurch gekennzeichnet, dass** dieser andere Zapfen (90, 92) direkt durch ein oberes Ende eines Sammelkastens (40, 42) des Nebenwärmetauschers (16) gebildet wird.

11. Baugruppe nach einem der Ansprüche 1 bis 10, **dadurch gekennzeichnet, dass** der Nebenwärmetauscher (14) selbst mit zwei Sockeln (94, 96) analog zu denjenigen des Hauptwärmetauschers (12) und mit zwei Halterungen (98, 100) analog zu denjenigen des Hauptwärmetauschers versehen ist, wodurch es ermöglicht wird, einen ersten Nebenwärmetauscher (14) an dem Hauptwärmetauscher (12) und gegebenenfalls einen zweiten Nebenwärmetauscher (16) an dem ersten Nebenwärmetauscher (14) anzubringen.

12. Baugruppe nach einem der Ansprüche 1 bis 11, **dadurch gekennzeichnet, dass** der Hauptwärmetauscher (12) ein Kühler eines Kraftfahrzeugmotors ist, während der Nebenwärmetauscher ein Ladeluftkühler (14) oder ein Klimaanlagenkondensator (16) ist.

13. Baugruppe nach Anspruch 12, **dadurch gekennzeichnet, dass** der Ladeluftkühler (14) mit zwei Halterungen (84, 88) versehen ist, die es gestatten, ihn direkt an dem Kühler (12) anzubauen und einen Klimaanlagenkondensator (16) an diesen Ladeluftkühler anzubauen.
